# EUROPEAN PATENT SPECIFICATION

(11) **EP 3 951 515 B1**
(45) Date of publication and mention of the grant of the patent: **15.07.2026**
(21) Application number: 19922745.5
(22) Date of filing: 27.05.2019
(51) Int. Cl.: G06F 21/36

(54) **HOUSEHOLD APPLIANCE AND CONTROL AUTHORITY SHARING METHOD THEREFOR, AND CONTROL TERMINAL AND STORAGE MEDIUM**
HAUSHALTSGERÄT UND VERFAHREN ZUR GEMEINSAMEN NUTZUNG EINER STEUERBERECHTIGUNG DAFÜR SOWIE STEUERENDGERÄT UND SPEICHERMEDIUM
APPAREIL ÉLECTROMÉNAGER ET SON PROCÉDÉ DE PARTAGE D'AUTORITÉ DE COMMANDE, TERMINAL DE COMMANDE ET SUPPORT DE STOCKAGE

(30) Priority: 31.03.2019 CN 201910259565
(43) Date of publication of application: 09.02.2022
(73) Proprietor: GD Midea Air-Conditioning Equipment Co., Ltd., Foshan, Guangdong 528311 (CN); Midea Group Co., Ltd., Foshan, Guangdong 528311 (CN)
(72) Inventor: GUO, Jun, Foshan, Guangdong 528311 (CN); ZHANG, Xiaohui, Foshan, Guangdong 528311 (CN)
(74) Representative: RGTH
(86) International application number: PCT/CN2019/088561
(87) International publication number: WO 2020/199330

(56) References cited:
- CN-A- 106 357 653
- CN-A- 106 856 430
- CN-A- 108 107 755
- CN-B- 104 836 791
- US-A1- 2013 086 700
- US-A1- 2016 234 186
- US-A1- 2019 024 930

## Description

### TECHNICAL FIELD

The present application relates to the technical field of control of smart home appliances, in particular to a home appliance, a control authority sharing method of the home appliance, a control terminal and a storage medium.

### BACKGROUND

With the improvement of living standards, smart home appliances are commonly used in the homes. As more and more smart home appliances are used, for the convenience of control those home appliances, exemplary technologies generally set up intelligent control systems and use one control terminal to control multiple smart home appliances. However, regarding those systems using one control terminal to control multiple smart home appliances, there still exists technical problems: there are generally more than two family members, and it is not convenient to use the same control terminal, especially when the control terminal is a mobile phone which is generally carried with one family member, it is inconvenient for the other family members to use smart home appliances.

CN 104 836 791 B provides the technical solution for eliminating the manual connection building process by allowing a first control terminal, that already have a connection with, and therefore a control authority over, a controlled terminal, to share its control authority with other control terminals. The other control terminals can gain the same control authority over the controlled terminal, upon the verification of the input of the same verification information as input by the first control terminal.

US 2016/234186 A1 depicts the use of cloud-authenticated site resource management devices (CASRM) for controlling resources within a home, building etc., wherein a user may use a personal electronic device to request changing settings, and the CASRM main controller as well as the unit controllers can change their ways of controlling the resources accordingly. The CASRM may authenticate the request from the user to change the setting by checking if the user inputs the correct credentials for the main controller or unit controllers. In special cases, a verified user (e.g. a manager of a hotel) can send a special message indicating a new user may be occupying some resources, the new user upon successfully verified himself/herself may also user his/her personal electronic device to interact with the main controller and control the resources, wherein the control can be time limited.

US 2019/024930 A1 discloses a system for controlling an HVAC system via an electronic device that allows a guest user to input settings, which are then subjected to a primary user's permission level. The system adjusts the HVAC based on granted permissions, enabling controlled access and preferences for guest users.

### SUMMARY

The main purpose of the present application is to provide a home appliance and a control authority sharing method thereof, a control terminal and a storage medium, aiming at solving the technical problems that only one control terminal controls the home appliance in the exemplary technology which results in inconvenient control and inconvenient use of smart home appliances by family members.

In order to realize the above purpose, the present application provides a home appliance control authority sharing method comprises following operations:
obtaining an authority setting rule corresponding to a control sharing operation upon receiving the control sharing operation, wherein the control sharing operation is obtained when a user triggers a sharing operation on a sharing interface of a sharing terminal;
generating a control authority to be used by a terminal to be shared based on the authority setting rule, wherein the control authority comprises a restriction to at least one of a control parameter setting, a control time setting and a control environment setting, wherein the control parameter setting comprises at least one of a control range of operation parameter of the home appliance and a control range of an operation mode of the home appliance, the control time setting comprises a time interval in which a control terminal controls the home appliance, and the control environment setting comprises at least one of a location range of the home appliance controlled by the control terminal, an ambient temperature control range of an environment and an ambient humidity control range in which the home appliance is located; and
sharing the control authority to the terminal to be shared, thereby the terminal to be shared controlling a home appliance according to the control authority set according to the authority setting rule.

According to the present invention, before the operation of sharing the control authority to the terminal to be shared, the method further comprises:
executing the operation of sharing the control authority to the terminal to be shared after acquiring the terminal to be shared.

According to the present invention, the operation of acquiring the terminal to be shared comprises:
receiving a sharing request generated by the terminal to be shared, wherein the sharing request is generated by scanning a QR code of a sharing terminal, then acquiring the terminal to be shared corresponding to the sharing request, the sharing request containing information of the QR code and the terminal to be shared.

According to the present invention, the operation of acquiring the terminal to be shared corresponding to a sharing request upon receiving the sharing request generated by the terminal to be shared by scanning a QR code of a sharing terminal comprises:
acquiring a current time point upon receiving the sharing request generated by the terminal to be shared scanning the QR code of the sharing terminal;
determining that the current time point is within an effective time period of the QR code in the information of the QR code, and executing the operation of acquiring the terminal to be shared corresponding to the sharing request.

Optionally, according to the present invention, the authority setting rule comprises at least one of a control parameter setting, a control time setting and a control environment setting, the control parameter setting comprises at least one of a control range of operation parameter of the home appliance and a control range of an operation mode of the home appliance, the control time setting comprises a time interval in which a control terminal controls the home appliance, and the control environment setting comprises at least one of a location range of the home appliance controlled by the control terminal, an ambient temperature control range of an environment and an ambient humidity control range in which the home appliance is located.

Optionally, according to the present invention, the operation of obtaining an authority setting rule corresponding to a control sharing operation upon receiving the control sharing operation comrpises:
obtaining a user information corresponding to the terminal to be shared upon receiving the control sharing operation; and
obtaining the corresponding authority setting rule according to the user information.

Optionally, according to the present invention, the operation of obtaining an authority setting rule corresponding to a control sharing operation upon receiving the control sharing operation comprises:
outputting a setting interface of the authority setting rule upon receiving the control sharing operation; and
obtaining the authority setting rule corresponding to a setting operation upon receiving the setting operation based on the setting interface.

Optionally, according to the present invention, obtaining the authority setting rule corresponding to the setting operation comprises:
in response to that the setting operation is a rule selection operation based on the setting interface, obtaining the authority setting rule corresponding to the rule selection operation; and/or,
in response to that the setting operation is a rule input operation based on the setting interface, obtaining the authority setting rule input by the rule input operation.

Optionally, according to the present invention, after the operation of sharing the control authority to the terminal to be shared, the method further comprises:
obtaining a terminal to be shared corresponding to an authority cancellation operation upon receiving the authority cancellation operation;
canceling the control authority of the terminal to be shared.

Optionally, according to the present invention, the operation of generating the control authority of the terminal to be shared based on the authority setting rule comprises:
acquiring a user information corresponding to the terminal to be shared;
determining an authority control time length according to the user information;
generating the control authority of the terminal to be shared according to the authority control time length and the authority setting rule.

Optionally, according to the present invention, after the operation of sharing the control authority to the terminal to be shared, the method further comprises:
receiving a control information sent by the terminal to be shared and outputting the control information;
after the terminal to be shared sends the control information to a home appliance, feeds back the control information to the sharing terminal; or
the terminal to be shared the sends control information, which is a preset prompt information, to a home appliance, and feeds back the control information to the sharing terminal, wherein the preset prompt information comprises an abnormal information, and the control information comprises at least one of an operation parameter of the home appliance, an operation mode of the home appliance, and a control time and a control place of the terminal to be shared.

An example of the present application also provides a home appliance control authority sharing method including following operations:
receiving, by a terminal to be shared, a control authority shared by a sharing terminal; and
storing the control authority to control a home appliance based on the control authority.

Optionally, as an example of the present application, after the operation of storing the control authority, the method further comprises:
Hiding a control authority other than the control authority.

Optionally, as an example of the present application, after the operation of storing the control authority, the method further comprises:
obtaining a control information corresponding to a home appliance control operation upon receiving the home appliance control operation;
judging whether the control information is within the control authority; and
sending the control information to the home appliance for the home appliance to respond to the control information in response to that the control information is within the control authority.
after the operation of sending the control information to the home appliance for the home appliance to respond to the control information, the method further comprises:
feeding back the control information to the sharing terminal, where the sharing terminal outputs the control information after receiving the control information; or
feeding back the control information which is preset prompt information to the sharing terminal, where the preset prompt information comprises an abnormal information, and the sharing terminal outputs the control information after receiving the control information.

Optionally, as an example of the present application, in response to that the control information is not within the control authority, the control information is determined to be abnormal.

An example of the present application also provides a home appliance control authority sharing method including the following operations:
responding, by a home appliance, to control information upon receiving the control information sent by a sharing terminal or a terminal to be shared;
the terminal to be shared obtains the control information corresponding to a home appliance control operation upon receiving the home appliance control operation, judging whether the control information is within a control authority, and sends the control information to the home appliance in response to that the control information is within the control authority, for the home appliance to respond to the control information.

The present application also provides a control terminal including a processor, a memory storing a sharing application program, the sharing application program being executable by the processor to realize each operation of the home appliance control authority sharing method described above.

The present application also provides a home appliance including a processor, a memory storing a sharing application program, the sharing application program being executable by the processor to realize each operation of the home appliance control authority sharing method described above.

The present application also provides a computer storage medium for storing a sharing application program for being executable by a processor to realize each operation of the home appliance control authority sharing method described above.

The embodiment of the present application provides a home appliance and a control authority sharing method thereof, a control terminal and a storage medium thereof. When a sharing terminal receives a control sharing operation, the sharing terminal obtains an authority setting rule corresponding to the control sharing operation, and shares the authority setting rule to a terminal to be share, which can quickly share the control authority of the home appliance to the terminal to be shared, realize the function of controlling the same equipment by multiple people, and provide convenience for family members to use the home appliance. In addition, because the authority setting rules can be preset based on the control sharing operation, more diversified authority distribution can be realized.

### BRIEF DESCRIPTION OF THE DRAWINGS

Fig. 1 is a schematic diagram of a hardware operation environment of a terminal involved in embodiments of the present application.
Fig. 2 is a schematic flow diagram of a first embodiment of a home appliance control authority sharing method according to the present application.
Fig. 3 is a schematic flow diagram of a second embodiment of a home appliance control authority sharing method according to the present application.
Fig. 4 is a schematic flow diagram of a third embodiment of a home appliance control authority sharing method according to the present application.
Fig. 5 is a schematic flow diagram of a fourth embodiment of a home appliance control authority sharing method according to the present application.
Fig. 6 is a schematic flow diagram of a fifth embodiment of a home appliance control authority sharing method according to the present application.
Fig. 7 is a schematic flow diagram of a sixth embodiment of a home appliance control authority sharing method according to the present application.
Fig. 8 is a schematic flow diagram of a seventh embodiment of a home appliance control authority sharing method according to the present application.
Fig. 9 is a schematic structural diagram of a sharing system related to a home appliance control authority sharing method according to an embodiment of the present application.

The realization of the objective, functional features and advantages of the present application will be further explained with reference to the accompanying drawings in combination with the embodiments.

### DETAILED DESCRIPTION OF THE EMBODIMENTS

It should be understood that the specific embodiments described herein are for explanatory purposes only and are not intended to limit the present application.

A main solution of the embodiments of the present application is: obtaining an authority setting rule corresponding to a control sharing operation upon receiving the control sharing operation; generating a control authority of a terminal to be shared based on the authority setting rule; and sharing the control authority to the terminal to be shared, so that the terminal to be shared can control a home appliance according to the control authority set according to the authority setting rule.

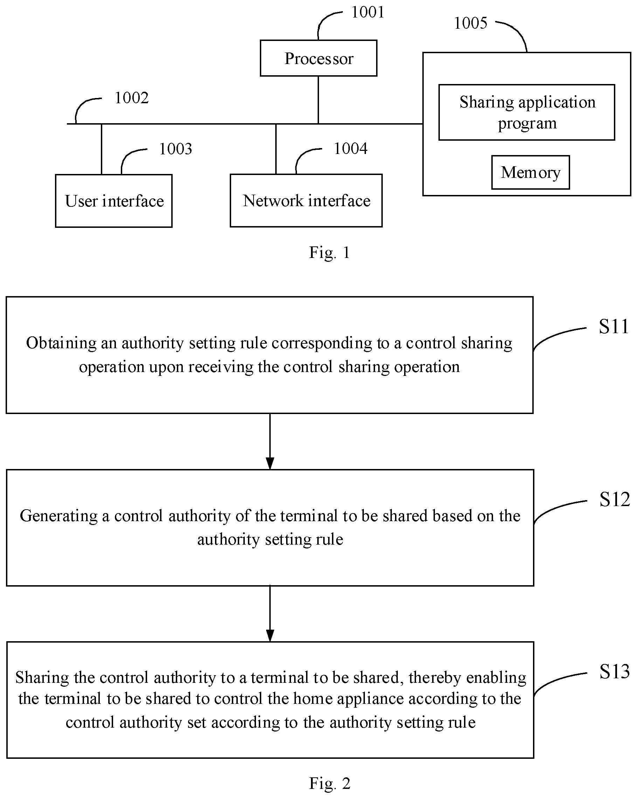

As shown in Fig. 1, Fig. 1 is a schematic diagram of a hardware operation environment of a terminal involved in embodiments of the present application.

The terminal of the embodiments of the present application may be a PC, a smart phone, a tablet computer, an e-book reader, an MP3 (Moving Picture Experts Group Audio Layer III) player, an MP4 (Moving Picture Experts Group Audio Layer IV) player, a portable computer or another terminal device with a display function. It can be understood that the terminal of this embodiment can also be a home appliance such as an air conditioning device, a refrigerator or the like having a display function.

As shown in Fig. 1, the terminal can include a processor 1001 such as a CPU, a network interface 1004, a user interface 1003, a memory 1005 and a communication bus 1002. The communication bus 1002 is used to realize connection and communication between those components. The user interface 1003 may include a display screen (Display), and an input unit such as a keyboard (Keyboard), and the user interface 1003 may optionally include a standard wired interface, and a wireless interface. The network interface 1004 may optionally include a standard wired interface, and a wireless interface (e.g. a WI-FI interface). The memory 1005 may be a high-speed RAM memory or a non-volatile memory such as a disk memory. The memory 1005 may optionally be a storage device independent of the processor 1001 described above.

Optionally, the terminal can include a camera, an RF (Radio Frequency) circuit, a sensor, an audio circuit, a WI-FI module, and the like. Sensors can include, such as a light sensor, a motion sensor and other sensors. In particular, the light sensor can include an ambient light sensor that can adjust a brightness of a display screen according to a brightness of the ambient light and a proximity sensor that can turn off the display screen and/or the backlight when the mobile terminal moves to the ear. As a kind of motion sensor, the gravity acceleration sensor can detect the acceleration in all directions (usually three axes), and can detect the magnitude and direction of gravity at rest. It can be used in applications for identifying mobile terminal postures (such as horizontal and vertical screen switching, related games, magnetometer posture calibration), vibration identification related functions (such as pedometer, knocking), etc. Of course, the mobile terminal can also be equipped with gyroscopes, barometers, hygrometers, thermometers, infrared sensors and other sensors, which will not be repeated here.

Those skilled in the art will appreciate that the terminal structure shown in Fig. 1 does not constitute a limitation to the terminal which may include more or fewer components than illustrated, or a combination of certain components, or different component arrangements.

As shown in Fig. 1 the memory 1005, as a computer storage medium, may include an operating system, a network communication module, a user interface module and a sharing application program.

In the terminal shown in Fig. 1, the network interface 1004 is mainly used for connecting a background server and performing data communication with the background server. The user interface 1003 is mainly used for connecting a client (user end) and performing data communication with the client. While the processor 1001 can be used to invoke the sharing application program stored in the memory 1005 and perform the following operations:
obtaining an authority setting rule corresponding to a control sharing operation upon receiving the control sharing operation;
generating a control authority of a terminal to be shared based on the authority setting rule;
sharing the control authority to the terminal to be shared, thereby enabling the terminal to be shared to control the home appliance according to the control authority set according to the authority setting rule.

Further, the processor 1001 can invoke the sharing application program stored in the memory 1005 and also perform the following operations:
obtaining user information corresponding to the terminal to be shared upon receiving the control sharing operation; and
obtaining the corresponding authority setting rule according to the user information.

Further, the processor 1001 can invoke the sharing application program stored in the memory 1005 and also perform the following operations:
outputting a setting interface of authority setting rules upon receiving the control sharing operation; and
obtaining the authority setting rule corresponding to a setting operation upon receiving the setting operation based on the setting interface.

Further, the processor 1001 can invoke the sharing application program stored in the memory 1005 and also perform the following operations:
in response to that the setting operation is a rule selection operation based on the setting interface, obtaining the authority setting rule corresponding to the rule selection operation; and/or,
in response to that the setting operation is a rule input operation based on the setting interface, obtaining the authority setting rule input by the rule input operation.

Further, the processor 1001 can invoke the sharing application program stored in the memory 1005 and also perform the following operations:
executing the operation of sharing the control authority to the terminal to be shared after the terminal to be shared is acquired.

Further, the processor 1001 can invoke the sharing application program stored in the memory 1005 and also perform the following operations:
acquiring the terminal to be shared corresponding to a sharing request upon receiving the sharing request generated by the terminal to be shared scanning a QR (Quick Response) code of the sharing terminal, the sharing request containing information of the QR code and the terminal to be shared.

Further, the processor 1001 can invoke the sharing application program stored in the memory 1005 and also perform the following operations:
acquiring a current time point upon receiving the sharing request generated by the terminal to be shared scanning the QR code of the sharing terminal;
judging whether the current time point is within an effective time period of the QR code, where the effective time period is carried by the information of the QR code;
in response to that the current time point is within the effective time period of the QR code, executing the operation of acquiring the terminal to be shared corresponding to the sharing request.

Further, the processor 1001 can invoke the sharing application program stored in the memory 1005 and also perform the following operations:
obtaining a terminal to be shared corresponding to an authority cancellation operation upon receiving the authority cancellation operation;
canceling the control authority of the terminal to be shared.

Further, the processor 1001 can invoke the sharing application program stored in the memory 1005 and also perform the following operations:
acquiring the user information corresponding to the terminal to be shared;
determining an authority control time length according to the user information;
generating the control authority of the terminal to be shared according to the authority control time length and the authority setting rule.

Further, the processor 1001 can invoke the sharing application program stored in the memory 1005 and also perform the following operations:
receiving control information sent by the terminal to be shared and outputting the control information;
where when the terminal to be shared sends control information to a home appliance, the control information is also sent to the sharing terminal; or
when the terminal to be shared sends control information which is preset prompt information to a home appliance, the control information is also sent to the sharing terminal, the preset prompt information includes abnormal information, and the control information includes at least one of operation parameters of the home appliance, control time and place of the terminal to be shared.

Further, the processor 1001 can invoke the sharing application program stored in the memory 1005 and also perform the following operations:
receiving, by the terminal to be shared, the control authority shared by the sharing terminal;
saving the control authority to control the home appliance based on the control authority.

Further, the processor 1001 can invoke the sharing application program stored in the memory 1005 and also perform the following operations:
hiding control authorities other than the control authority.

Further, the processor 1001 can invoke the sharing application program stored in the memory 1005 and also perform the following operations:
obtaining control information corresponding to a home appliance control operation upon receiving the home appliance control operation;
judging whether the control information is within the control authority;
in response to that the control information is within the control authority, sending the control information to the home appliance for the home appliance to respond to the control information.

Further, the processor 1001 can invoke the sharing application program stored in the memory 1005 and also perform the following operations:
feeding back the control information to the sharing terminal, where the sharing terminal outputs the control information after receiving the control information; or
feeding back the control information which is preset prompt information to the sharing terminal, where the preset prompt information includes abnormal information, and the sharing terminal outputs the control information after receiving the control information.

Further, the processor 1001 can invoke the sharing application program stored in the memory 1005 and also perform the following operations:
responding, by the home appliance, to the control information upon receiving the control information sent by the sharing terminal or the terminal to be shared;
the terminal to be shared obtains the control information corresponding to the home appliance control operation upon receiving the home appliance control operation, judges whether the control information is within the control authority, and sends the control information to the home appliance for the home appliance to respond to the control information, when the control information is within the control authority.

Referring to Fig. 2, Fig. 2 is a schematic flow diagram of a first embodiment of a home appliance control authority sharing method provided by the present application. In this embodiment, the home appliance control authority sharing method includes the following operations:
S11, obtaining an authority setting rule corresponding to a control sharing operation upon receiving the control sharing operation;
S12, generating a control authority of the terminal to be shared based on the authority setting rule; and
S13, sharing the control authority to a terminal to be shared, thereby enabling the terminal to be shared to control the home appliance according to the control authority set according to the authority setting rule.

An executive body of this embodiment of the present application is a sharing terminal, which can be a mobile terminal such as a mobile phone or a tablet computer, or can be a central controller of home appliances such as a central remote control. A controlled home appliance is assigned with a plurality of control instructions. The sharing terminal has all or part of the control authorities of controlling the home appliance. The terminal to be shared intelligently controls the home appliance within the scope of the control authorities. For the control authorities of the terminal to be shared is shared by the sharing terminal, the sharing terminal has more control authorities than the terminal to be shared.

The sharing terminal can determine that a control sharing operation is received when a user triggers a sharing operation on the sharing interface of the sharing terminal. If the sharing terminal is a mobile phone, a control sharing operation button is displayed on a corresponding APP of the mobile phone. When the user triggers the control sharing operation button, the terminal receives the control sharing operation. Alternatively, the sharing terminal determines that the control sharing operation is received when the sharing terminal adds the terminal to be shared or when the user triggers the sharing to the added terminal to be shared.

The sharing terminal acquires the authority setting rule corresponding to the control sharing operation upon receiving the control sharing operation, and generates the control authority of the terminal to be shared based on the authority setting rule. The authority setting rule includes at least one of control parameter settings, control time settings and control environment settings. The control parameter settings include at least one of a control range of operation parameters of the home appliance and a control range of operation modes of the home appliance, such as, a target temperature control range, an operating frequency control range of the compressor or a control range of wind speed (wind gears) of the home appliance, etc., or as a control range of the home appliance such as cooling, heating, wind supply, no wind feeling, dehumidification or humidification, allowing the control of heating but not allowing the control of air supply or dehumidification, or other functions. The control time settings include a time interval for a control terminal to control the home appliance, for example, a time period for allowing the control terminal to control the home appliance is daytime or night, and the home appliance is not controllable by the control terminal at other time periods. The control environment settings include at least one of a location range of home appliances controlled by the control terminal, an ambient temperature control range and an ambient humidity control range of the home appliances. If a place where the control terminal is allowed to control home appliances is a bedroom or a fixed city, home appliances at other locations are not controllable by the control terminal. Another example is that when an ambient temperature of a home appliance is within a preset temperature range, the control terminal is allowed to control the home appliance (when the current ambient temperature is 30 °C to 35 °C, the control terminal is allowed to control the refrigeration function of the air conditioner), or when an ambient humidity of the home appliance is within a preset humidity range, the control terminal is allowed to control the home appliance (when the current ambient humidity is high, the control terminal is allowed to control the dehumidification function of the air conditioner). It can be understood that the above-mentioned is only one of the embodiments, and the authority setting rules are set according to the settings of the user, and different specific settings correspond to different authority setting rules.

The authority setting rules corresponding to different terminals to be shared can be the same or different. Specifically, when the sharing terminal receives a control sharing operation, there are at least three embodiments to acquire an authority setting rule.

The first embodiment: user information corresponding to the terminal to be shared is obtained upon receiving the control sharing operation, and the corresponding authority setting rule is obtained according to the user information.

A plurality of authority setting rules are preset on the sharing terminal, specifically different authority setting rules are preset corresponding to different users, such as different authority setting rules for the elderly, children and adults, or different authority setting rules are specifically preset for different family members, for example, different authority setting rules for User 1, User 2, User 3, Visitor 1 and Visitor 2. When the control sharing operation is received, the user information corresponding to the terminal to be shared is obtained, for example, whether the user of the terminal to be shared is an old man or a child, is User 1 or Visitor 1 is determined, and then the authority setting rule corresponding to the user information is obtained according to the determined user information.

In this embodiment, different authority setting rules are specifically determined according to different user information, the authority setting rules of terminals to be shared have pertinence, and especially the sharing is related to the characteristics of the users, namely, the shared control authorities can meet the users' requirements, and control authorities beyond the user's requirements are not shared, and the users are effectively prevented from controlling the functions not required.

The second embodiment: the authority setting rule is set based on a setting interface. If a control sharing operation is received, a setting interface of authority setting rule is output, and when a setting operation based on the setting interface is received, an authority setting rule corresponding to the setting operation is acquired.

The specific setting operation can be a selection operation of selecting an option. For example, obtaining the authority setting rule corresponding to the setting operation includes:
obtaining an authority setting rule corresponding to a rule selection operation when the setting operation is the rule selection operation based on the setting interface.

A variety of authority setting rules are preset in advance on the sharing terminal, and the authority setting rules can be preset according to habits of different users, for example the first authority setting rule is preset to be: the allowed control range of air conditioner being 20°C to 26 °C, controllable wind speed, and the allowed control time being evening, the second authority setting rule is preset to be: the allowed control range of air conditioner being 16 °C to 30 °C, strong and controllable wind speed, the allowable control time being daytime, or the allowed city being City A, the third rule is preset to be: the allowable control range of air conditioner being 16 °C to 30°C, strong or controllable wind speed, the allowed control time being noon, or the allowed city is City B, etc. It can also preset according to different use scenarios or simulated city scenarios, such as setting the first authority setting rule as windless control, the second authority setting rule as simulation control of City A, and the third authority setting rule as autumn scene control of City B, etc.

A plurality of options of authority setting rule are displayed on the setting interface of the sharing terminal, when the user performs a rule selection operation based on the setting interface of the sharing terminal, an option corresponding to the rule selection operation is obtained, and the sharing terminal retrieves a corresponding authority setting rule from the memory according to the option, or downloads the corresponding authority setting rule from a server and sends the authority setting rule to the terminal to be shared. The plurality of authority setting rules can be preestablished and stored in the sharing terminal or the server.

In this embodiment, when the control sharing operation is received through the setting interface, the user can arbitrarily select an authority setting rule based on the authority setting interface, that is, the authority setting rule can be quickly selected to generate the control authority for sharing, and the selectivity of the authority setting rule can be increased.

The third embodiment: when setting based on the setting interface, it also includes the following modes: the setting operation can be an input operation, that is, the setting interface is provided with an input port, and rules are input through the input port, the input port can be a keyboard input port or a mouse input port.

For example, the acquisition of the authority setting rule corresponding to the setting operation includes the following operations:
acquiring an authority setting rule input by a rule input operation when the setting operation is the rule input operation based on the setting interface.

The sharing terminal is provided with a setting interface. The setting interface is output upon receiving the control sharing operation. The setting interface is an input interface of the sharing terminal and provides an information input port for the user. The user can set the authority setting rule in the setting interface according to the requirement, and then the information input through the setting interface of authority setting rule is taken as the authority setting rule, so as to generate the control authority according to the authority setting rule.

By adding the interaction between the user and the setting interface, this embodiment realizes that the user can arbitrarily set an authority setting rule based on the setting interface, and the diversity of the authority setting rules is increased and the flexibility of setting the authority setting rules is improved.

It can be seen that, the sharing terminal of this embodiment of the present application obtains an authority setting rule corresponding to a control sharing operation upon receiving the control sharing operation, generates a control authority of the terminal to be shared based on the authority setting rule, and then shares the control authority to the terminal to be shared. The sharing terminal of this embodiment can quickly share a control authority of controlling a home appliance to a terminal to be shared, which realizes the function of multiple people controlling the same equipment, and provides convenience for family members to use home appliances. In addition, because authority setting rules can be preset based on control sharing operations, the diversified authority distribution is realized, and the terminals to be shared control home appliances according to the control authorities set by the authority setting rules, thus realizing the control and management of home appliances.

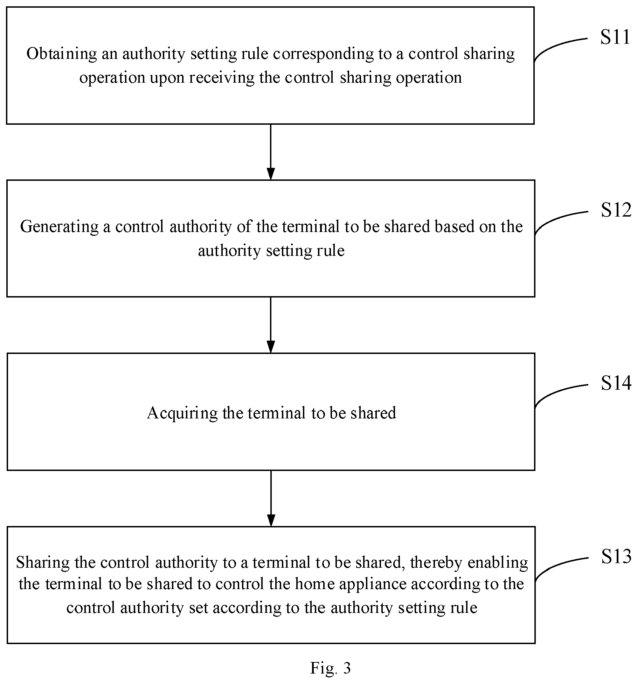

Further, referring to Fig. 3, the present application provides a second embodiment of a home appliance control authority sharing method. Based on the first embodiment, before the operation of sharing the control authority to the terminal to be shared, the method further includes:
S14, executing the operation of sharing the control authority to the terminal to be shared upon acquiring the terminal to be shared.

Before the sharing terminal receives the control sharing operation, the terminal to be shared is associated with the sharing terminal by scanning the QR code of the sharing terminal. After the sharing terminal is associated with the terminal to be shared, the sharing terminal can obtain the terminal to be shared directly based on the association upon receiving the control sharing operation. Alternatively, the sharing terminal obtains an authority setting rule corresponding to a control sharing operation upon receiving the control sharing operation. After the control authority is generated based on the authority setting rule, the sharing terminal generates a QR code and displays the QR code to the terminal to be shared for the terminal to be shared to scan the QR code. After detecting that the QR code is scanned by the terminal to be shared, the sharing terminal acquires the terminal to be shared and shares the control authority to the terminal to be shared.

Specifically, the operation of acquiring the terminal to be shared includes:
acquiring the terminal to be shared corresponding to a sharing request upon receiving the sharing request generated by the terminal to be shared scanning a QR code of the sharing terminal, the sharing request containing information of QR code and the terminal to be shared.

When the sharing terminal wants to share the control authority to the terminal to be shared, the sharing terminal generates a QR code according to an identification of a controlled home appliance corresponding to the control authority and an effective time period of the QR code, and displays the QR code to the terminal to be share. After the terminal to be shared scans the QR code, the terminal to be shared obtains information corresponding to the QR code which includes the identification of the controlled home appliance and the effective time period of the QR code, generates a sharing request according to the information and the terminal to be shared after the information is obtained, and sends the sharing request to a server, and the server sends the sharing request to the sharing terminal. After the sharing terminal receives the sharing request, the sharing terminal can obtain the corresponding terminal to be shared based on the sharing request, and further determines whether to share with the terminal to be shared. It can be understood that the terminal to be shared can also directly send the sharing request to the sharing terminal.

Furthermore, in order to prevent the QR code from being cracked or maliciously changed when it is valid for a long time, the sharing terminal sets the effective time period of the QR code when sharing the control authority, and the sharing terminal shares the control authority to the terminal to be shared only when the terminal to be shared sends the sharing request within the effective time period of the QR code. If the sharing request is sent beyond the effective time period of the QR code, a new QR code needs to be generated for connecting with the terminal to be shared.

Specifically, the operation of acquiring the terminal to be shared corresponding to a sharing request upon receiving the sharing request generated by the terminal to be shared scanning a QR code of the sharing terminal includes:
acquiring a current time point upon receiving the sharing request generated by the terminal to be shared scanning the QR code of the sharing terminal;
judging whether the current time point is within an effective time period of the QR code, the information of the QR code including the effective time period of the QR code;
in response to that the current time point is within the effective time period of the QR code, executing the operation of acquiring the terminal to be shared corresponding to the sharing request.

Understandably, the validity of the sharing request can be judged on the server. When the terminal to be shared scans the QR code of the sharing terminal, the terminal to be shared generates a sharing request and sends the sharing request to the server. The server obtains the effective time period of the QR code in the sharing request and the current time point, judges whether the current time point is within the effective time period of the QR code, and sends the sharing request to the sharing terminal when the current time point is within the effective time period of the QR code. After receiving the sharing request and confirming to share with the terminal to be shared, the sharing terminal executes the operation of acquiring the terminal to be shared corresponding to the sharing request.

The effective time period of the QR code is set when the sharing terminal generates the QR code. The sharing request not falling within the effective time period is determined as an illegal sharing request, and the sharing terminal does not respond to the sharing request, thus effectively preventing the random sharing of the control authority and improving the accuracy and effectiveness of the sharing of the control authority.

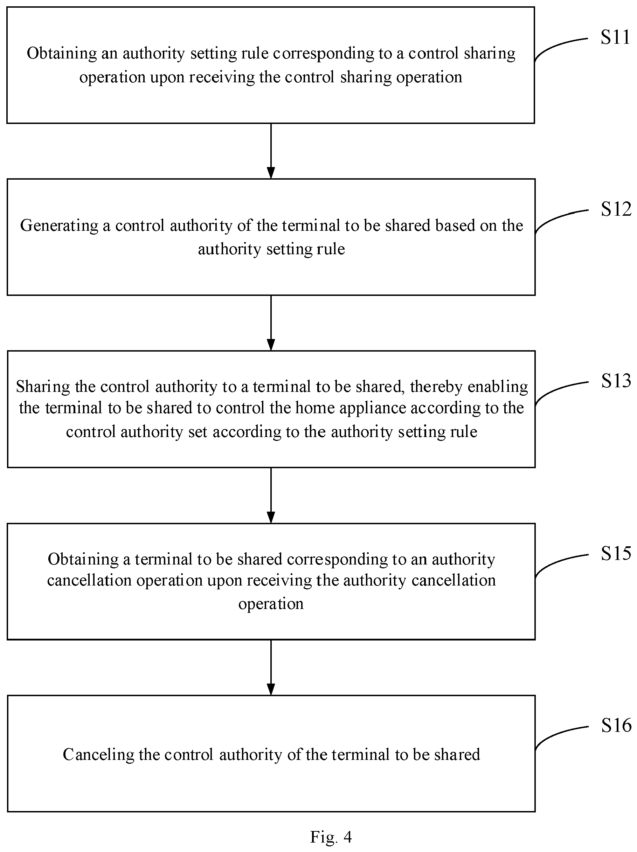

Referring to Fig. 4, the present application provides a third embodiment of a home appliance control authority sharing method. Based on all the above embodiments, the operation of sharing the control authority to the terminal to be shared in this embodiment further includes:
S15, obtaining a terminal to be shared corresponding to an authority cancellation operation upon receiving the authority cancellation operation;
S16, canceling the control authority of the terminal to be shared.

After the sharing terminal shares the control authority to a terminal to be shared, the sharing terminal is associated with the terminal to be shared, and manages the terminal to be shared based on the association. Specifically, the control authority of the terminal to be shared can be modified or canceled.

When the user triggers the authority cancellation operation of canceling the control authority of the terminal to be shared based on an interface of the sharing terminal, the authority cancellation operation is determined to be received, and the terminal to be shared is determined according to a terminal selected corresponding to the authority cancellation operation, the control authority of the terminal to be shared is canceled. The specific cancellation method can be to restrict the terminal to be shared from controlling the home appliance.

For the control authority can be canceled to manage control authorities of controlling home appliances, when the terminal to be shared is a temporary control terminal, or the current control authority is insufficient for the terminal to be shared, or the terminal to be shared is logged out, the control authority of the terminal to be shared can be canceled according to the authority cancellation operation, and the control authority can be flexibly managed.

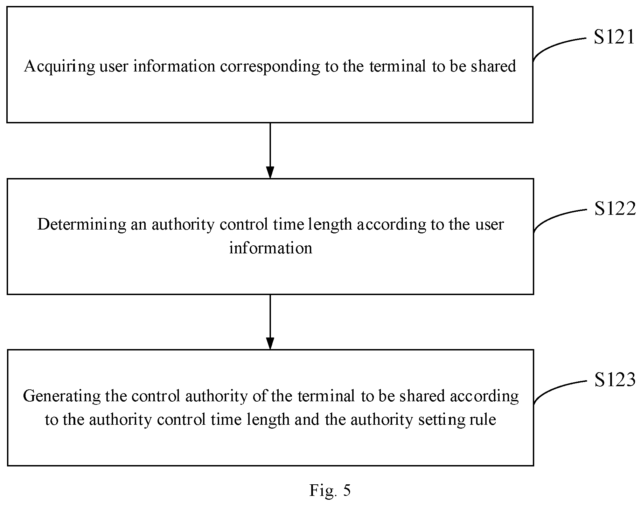

Referring to Fig. 5, the present application provides a fourth embodiment of a home appliance control authority sharing method. Based on all the above embodiments, the operation of generating the control authority of the terminal to be shared based on the authority setting rule in this embodiment includes:
S121, acquiring user information corresponding to the terminal to be shared;
S122, determining an authority control time length according to the user information;
S123, generating the control authority of the terminal to be shared according to the authority control time length and the authority setting rule.

The authority control time length is a time length that the terminal to be shared controls the home appliance based on the control authority. For example, the control time length can be set to be temporary. The temporary control time is specifically determined according to a time length of the terminal to be shared staying within a preset range. The preset range can be determined according to the local area network where the terminal to be shared and the sharing terminal or the home appliance are located or the range covered by the WI-FI of the sharing terminal or the home appliance. The control authority generated according to the temporary control time length and the authority setting rule is a temporary authority. When the terminal to be shared is not detected within the preset range, the temporary authority expires, and the terminal to be shared cannot control the home appliance. The user information of the present application corresponding to the temporary control time length is the visitor or the like.

For example, the control time length can be set to be permanent, the control authority generated according to the permanent control time length and the authority setting rule is a permanent authority. When the control authority got by the terminal to be shared is a permanent authority, the terminal to be shared has a permanent control authority to control the home appliance. The permanent control time length corresponds to the user information of the present application is the master or the like.

For example, the control time length can be any value set by the user. Specifically, the control time length can be set according to the user information. For example, when the user corresponding to the terminal to be shared is a child, the control time length of the child having the control authority can be set as one month or half a year. After the control time length expires, the terminal to be shared cannot control the home appliance.

If the control authority is generated according to the authority control time length and the authority setting rule, the control time length is included in the control authority. When the control time of the terminal to be shared to control the home appliance reaches the authority control time length, the control authority is disabled, and the home appliance does not respond to the home appliance control operation triggered by the terminal to be shared.

The control time length is specifically determined according to the user information corresponding to the terminal to be shared. If the user information corresponding to the terminal to be shared is a visitor, the control time length is a temporary control time length, and if the user information corresponding to the terminal to be shared is a master, the control time length is a permanent control time length, etc. The control time length can be set according to the user information.

In this embodiment, by setting the authority control time length of the control authority, the condition setting of the control authority is increased. When the control time duration of the terminal to be shared reaches the authority control time length, the control authority automatically fails, so that the control authority of the terminal to be shared is automatically canceled, and the flexibility of the control authority setting of the sharing terminal to be shared is further improved.

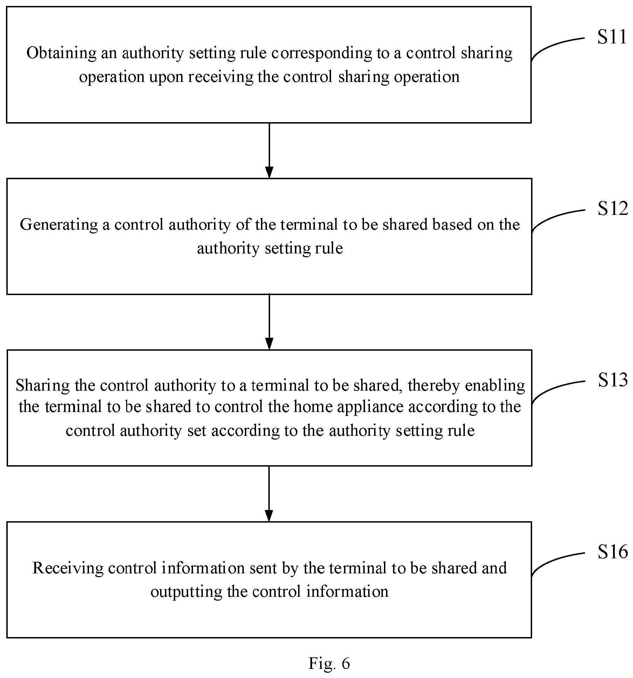

Referring to Fig. 6, a schematic flow diagram of a fifth embodiment of a home appliance control authority sharing method is provided by the present application. Based on all the above embodiments, after the operation of sharing the control authority to the terminal to be shared, the method further includes:
S17, receiving control information sent by the terminal to be shared and outputting the control information. When sending the control information to the home appliance, the terminal to be shared also feeds back the control information to the sharing terminal, and the control information includes at least one of operation parameters of the home appliance, operation modes of the home appliance, control time and place of the terminal to be shared.

In this embodiment, after the sharing terminal shares the control authority to the terminal to be shared, the sharing terminal monitors the control authority and the control process of the terminal to be shared controlling the home appliance in real time. When the control information is sent to the home appliance by the terminal to be shared, the control information is fed back to the sharing terminal based on the connection between the sharing terminal and the terminal to be shared, and the sharing terminal realizes real-time monitoring. After receiving the control information of the terminal to be shared, the sharing terminal outputs the control information for the user of the sharing terminal to get the control information.

It can be understood that in order to prevent frequent output of the control information, the home appliance control authority sharing method may further include performing the operation of outputting the control information when the control information conflicts with environmental parameters of the current environment. That is, after the terminal to be shared feeds back the control information, the sharing terminal compares the environmental parameters of the current environment and the operation parameters of the home appliance corresponding to the control information. When the environmental parameters conflict with the operating parameters of the home appliance, it is determined that the control information conflicts with the environmental parameters of the current environment. The environmental parameters include an ambient temperature, an ambient humidity, an ambient brightness, and an ambient pollution concentration (concentrations of carbon dioxide, carbon monoxide, and particle, etc.), etc. If the current ambient temperature is too high and the terminal to be shared controls the heating of the air-conditioner, it is determined that the control information conflicts with the environmental parameters of the current environment, and at this time, the control information is output so that the user of the sharing terminal can know the control situation of the terminal to be shared controlling the home appliance.

Or, receiving control information sent by the terminal to be shared and outputting the control information, where the terminal to be shared sends the control information which is preset prompt information to the home appliance, the control information is fed back to the sharing terminal, the preset prompt information includes abnormal information, and the control information includes at least one of operation parameters of the home appliance, operation modes of the home appliance, and control time and place of the terminal to be shared.

In this embodiment, in order to prevent frequent prompting the user of the sharing terminal, the sharing terminal can also preset prompt information, such as preset abnormal information as the preset prompting information. When the sharing terminal sends control information beyond the control authority to the home appliance, the control information is abnormal information. Or the control information of part of terminals to be shared is preset as preset prompt information, and the control information of other terminals to be shared is not to prompt. Or, the control information of the terminal to be shared corresponding to an over-high temperature or an over-low temperature of the home appliance is preset as the preset prompt information. Or, the control information corresponding to the heating control of the home appliance by the terminal to be shared is preset as the preset prompt information. It is to be understood that the foregoing preset prompt information is only for explanation of the enumerated embodiments and is not limited to the above-mentioned embodiments. When the terminal to be shared sends control information to the home appliance and the control information is the preset prompt information, the control information is fed back to the sharing terminal, so that other control information fed back by the terminal to be shared can be flexibly shielded.

The sharing terminal of the embodiment monitors the control information of the terminal to be shared. When the sharing terminal receives the control information fed back by the terminal to be shared, the control information of the terminal to be shared is pushed for prompting, and letting the user of the sharing terminal know the control process applied by the terminal to be shared, which can more effectively prevent accidents. For example, one of the terminals to be shared turns on the air conditioner of the bedroom for heating to 30 °C, and there are children in the bedroom at this time, the indoor environment will be deteriorated under this temperature for a long time, which even affects the health of the children, in this embodiment, the sharing terminal can respond timely to safety problems after the sharing terminal obtains the control information.

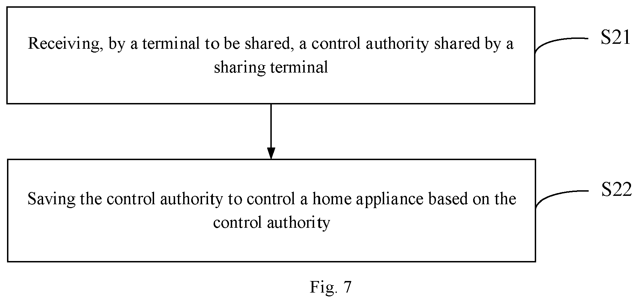

Referring to Fig. 7, Fig. 7 is schematic a flow diagram of a sixth embodiment of a home appliance control authority sharing method provided by the present application. The home appliance control authority sharing method includes the following operations:
S21, receiving, by a terminal to be shared, a control authority shared by a sharing terminal;
S22, saving the control authority to control a home appliance based on the control authority.

This embodiment is run on the terminal to be shared, and the terminal to be shared is connected with the sharing terminal. When the terminal to be shared receives the control authority shared by the sharing terminal, the terminal to be shared saves the control authority and only allows the user to carry out control operations within the control authority. For example, the control authority of the terminal to be shared is: the operation control range of air conditioner being 20 °C and 26 °C, controllable wind speed, and the allowed control time being evening. The control authority generated by the terminal to be shared is: the setting temperature is adjustable between 20°C and 26 °C, and works in night, and does not work in times other than the night. When the control information beyond the control authority is input based on the terminal to be shared, the terminal to be shared cannot send the control information to the home appliance.

The way of storing the control authority can be to directly store the control authority in a storage of the terminal to be shared. When the terminal to be shared sends the control information, the control authority is compared with a control information range corresponding to the control authority, and when the control information is within the control information range corresponding to the control authority, the control information is sent to the home appliance, so that the home appliance responds to the control information. Or, the way of storing the control authority can be to display the control authority on a display interface of the terminal to be shared, and the user can only carry out the home appliance control operation based on the control authority of the terminal to be shared. Or, the way of storing the control authority is to only activate the control authority in original control authorities of the terminal to be shared, and the user can control the home appliance based on the activated control authority.

Further, all control authority options are shown on the display interface of the terminal to be shared, however, before receiving the control authority shared by the sharing terminal, the terminal to be shared does not respond to selection of any control authority. After receiving the control authority shared by the sharing terminal, the terminal to be shared controls control authorities other than the control authority to hide, so as to prevent the user from triggering the options of other control authorities on the terminal to be shared, and at the same time, it is convenient for the user to know the control authority and cannot carry out operations beyond the control authority.

When the terminal to be shared receives the control authority of the sharing terminal, the terminal to be shared stores the control authority. The terminal to be shared controls the home appliance based on the control authority, and cannot send control information beyond the control authority to the home appliance, thus effectively preventing the user from operating the control information beyond the authority setting rule.

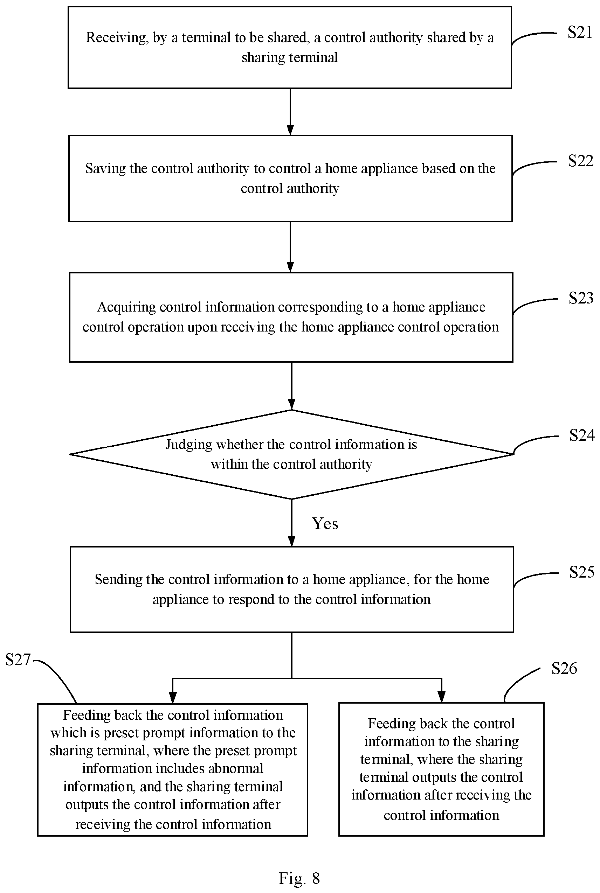

Referring to Fig. 8, Fig. 8 is a schematic flow diagram of a seventh embodiment of a home appliance control authority sharing method provided by the present application. Based on the sixth embodiment, after the operation of storing the control authority, the control authority further includes:
operation S23, acquiring control information corresponding to a home appliance control operation upon receiving the home appliance control operation;
operation S24, judging whether the control information is within the control authority;
operation S25, sending the control information to a home appliance in respond to that the control information is within the control authority, for the home appliance to respond to the control information.

After the terminal to be shared receives the control authority, the terminal to be shared is restricted from controlling beyond the rule. When the terminal to be shared receives a home appliance control operation carried out by the user on the terminal to be shared, the terminal to be shared acquires control information corresponding to the home appliance control operation, extracts the control information, and judges whether the control information is within the control authority. If the control information is within the control authority, the terminal to be shared sends the control information to the home appliance for the home appliance to respond to the control information. On the contrary, if the control information is not within the control authority, the terminal to be shared does not respond to the control information, that is, the terminal to be shared does not send the control information to the home appliance, or outputs illegal operation prompt information to prompt the user to modify the control information. There are many ways to judge whether the control information is within the control authority, for example, whether a set temperature is within a set temperature range defined by the control authority is judged, if the set temperature is within the set temperature range defined by the control authority, the control information is determined to be within the control authority. Or, a control time corresponding to the control information is acquired, and whether the control time is within the control time length of the control authority is judged. If the control time is within the control time length of the control authority, it is determined that the control information is within the control authority.

It can be understood that, the control information includes a plurality of authority factors, such as a set temperature, a control time, a control city, etc. As long as it is determined that one of the authority factors in the control information is not within the control authority, it is determined that the control information is not within the control authority, and the terminal to be shared does not respond to the control information, that is, the terminal to be shared does not send the control information to the home appliance.

Because the terminal to be shared is restrained based on the control authority shared by the sharing terminal, the user of the terminal to be shared can be effectively prevented from controlling beyond the control authority, so that the sharing terminal can more effectively manage each terminal to be shared.

After the operation of sending the control information to the home appliance for the home appliance to respond to the control information, the method further includes:
operation S26, feeding back the control information to the sharing terminal, where the sharing terminal outputs the control information after receiving the control information.

In this embodiment, all controls of the terminal to be shared applied on the home appliance are fed back to the sharing terminal, so that the sharing terminal can monitor the terminal to be shared, and the security degree of control authority sharing is improved.

Or, operation S27, feeding back the control information which is preset prompt information to the sharing terminal, where the preset prompt information includes abnormal information, and the sharing terminal outputs the control information after receiving the control information.

When the control information is not within the control authority, it is determined that the control information is abnormal.

In this embodiment, when the control information is the preset prompt information, the control information is fed back to the sharing terminal based on the preset prompt information set by the sharing terminal, thereby effectively preventing the sharing terminal from receiving prompt information too frequently.

Specifically, the preset prompt information set by the sharing terminal can be specifically set according to the user's requirements, for example, abnormal information is set as the preset prompt information. When the terminal to be shared sends control information beyond the control authority to the home appliance, the control information is abnormal information. Or the control information of part of terminals to be shared is set as the preset prompt information, and the control information of other terminals to be shared is not to prompt, Or, the control information of the terminal to be shared corresponding to an over-high temperature or an over-low temperature of the home appliance is preset as the preset prompt information. Or, the control information corresponding to the heating control of the home appliance by the terminal to be shared is preset as the preset prompt information. It is to be understood that the foregoing preset prompt information is only for explanation of the enumerated embodiments and is not limited to the above-mentioned embodiments. When the terminal to be shared sends control information to the home appliance and the control information is the preset prompt information, the control information is fed back to the sharing terminal, so that other control information fed back by the terminal to be shared can be flexibly shielded.

In this embodiment, after the sharing terminal shares the control authority to the terminal to be shared, the control authority and the control process of the terminal to be shared to the home appliance are monitored in real time. When the control information is sent to the home appliance through the terminal to be shared, the control information is fed back to the sharing terminal based on the connection between the sharing terminal and the terminal to be shared, and the sharing terminal realizes real-time monitoring. After receiving the control information of the terminal to be shared, the sharing terminal outputs the control information for the user of the sharing terminal to get the control information, which is convenient for the sharing terminal to monitor the use safety of each terminal to be shared.

In addition, the present application also provides an eighth embodiment of a home appliance control authority sharing method. The home appliance control authority sharing method includes the following operations:
responding, by a home appliance, to control information upon receiving the control information sent by a sharing terminal or a terminal to be shared;

When the terminal to be shared receives a home appliance control operation, the terminal to be shared obtains control information corresponding to the home appliance control operation, judges whether the control information is within a control authority, and sends the control information to the home appliance in respond to that the control information is within the control authority, for the home appliance to respond to the control information.

The home appliance includes an air conditioning device such as an air conditioner, a refrigerator, an induction cooker and a water heater. When a terminal to be shared or a sharing terminal sends control information to the home appliance based on its own control authority, the home appliance directly responds to the control information. The control information includes one of a control instruction and an operation parameter, for example, when the home appliance receives the control instruction, the home appliance directly controls the operation based on the control instruction, when the home appliance receives the operation parameter, the home appliance directly operates according to the operation parameter. It can be understood that the control information may also include terminal identification information, for example, the home appliance can determine the terminal to be shared or the sharing terminal which sends the control information according to the terminal identification information.

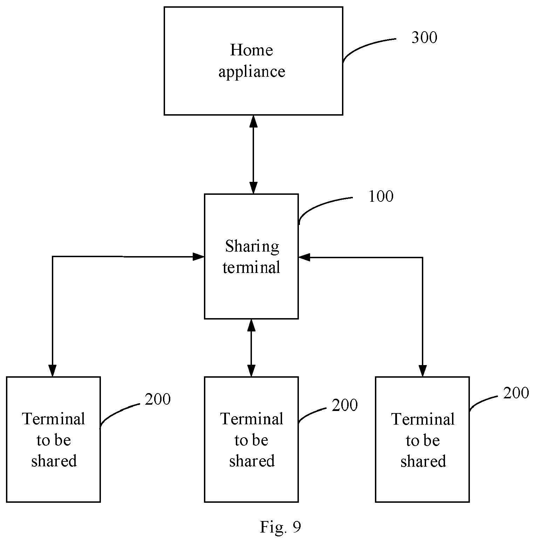

In addition, with reference to Fig. 9, Fig. 9 is a schematic structural diagram of a sharing system related to a home appliance control authority sharing method of the present application, The sharing system includes a sharing terminal 100, a home appliance 300 and at least one terminal to be shared 200. Both the sharing terminal 100 and the terminal to be shared 200 are connected with the home appliance 300, and the connection between the sharing terminal 100 and the terminal to be shared 200 can be realized based on wireless or a background server. The sharing terminal 100 is a main sharing party in the sharing system, the terminal to be shared 200 is a shared party in the sharing system, and the home appliance 300 is a controlled party corresponding to the sharing terminal 100 and the terminal to be shared 200. The sharing terminal 100 presets different authority setting rules based on differences of the terminals to be shared 200. According to the authority setting rules, different control authorities are generated, and the different control authorities are shared to different terminals to be shared 200. Thus, each terminal to be shared 200 stores its respective received control authority, and controls the home appliance 300 under the granted control authority.

The sharing terminal 100 can set different authority setting rules for different terminals to be shared 200, such as setting the first authority setting rule to be: the allowed control range of air conditioner being 20 °C to 26 °C, and controllable wind speed. That is, the control authority corresponding to the first authority setting rule is sent to the terminal to be shared 200. When the terminal to be shared 200 operates the home appliance according to the control authority corresponding to the first authority setting rule, the temperature range of the home appliance that can be controlled by the terminal to be shared 200 is 20 °C to 26 °C. In addition, it can set that the terminal to be shared 200 can only control the home appliance between 17:00 and 19:00 every night, and cannot control at other times.

For example, the second authority setting rule can be set to be: the allowed control range of air conditioner is 16 °C to 30 °C, the mode of wind speed being strong and controllable, the allowable control time being daytime, or the allowable city being City A. That is, the control authority corresponding to the second authority setting rule is sent to the terminal to be shared 200. When the terminal to be shared 200 operates the home appliance according to the control authority corresponding to the second authority setting rule, the temperature range of the home appliance that can be controlled by the terminal to be shared 200 is 16 °C to 30 °C, and the functions that can be controlled are (wind speed, mode & strong, temperature unit, etc.). In addition, the allowed control time or city can be set for the terminal to be shared 200, and other times and areas are not allowed to control.

For example, the third authority setting rule can be set to be: the allowed control range of air conditioner is 16 °C to 30 °C, and the wind speed and mode being strong or controllable. That is, the control authority corresponding to the third authority setting rule is sent to the terminal 200 to be shared, when the terminal to be shared 200 operates the home appliance according to the third authority setting rule, the temperature range of the home appliance that can be controlled by the terminal to be shared 200 is 16 °C to 30 °C, and the functions that can be controlled being (wind speed, mode & strong, temperature unit, etc.), and the allowed control time or city can also be set for the terminal to be shared 200. Other times and areas are not allowed to control.

It can be understood that, when the terminal 200 to be shared controls the home appliance 300 under the granted control authority, the terminal to be shared feeds back the control information to the sharing terminal 100 so that the sharing terminal 100 can monitor the control operation of the terminal to be shared 200. When the control information of the terminal to be shared 200 conflicts with the environmental parameters of the current environment, the sharing terminal 100 can receive prompt information. Or the sharing terminal 100 can modify the control authority of the terminal to be shared 200. Since the interaction between the sharing terminal 100 and the terminal to be shared 200 is added, convenient control of the home appliance 300 by multiple users is realized, and random control of the home appliance 300 by the terminal to be shared 200 can be effectively prevented. Different terminals to be shared 200 have different control authorities, which is convenient for the management applied by the sharing terminal 100.

The present application also provides a control terminal, which includes a processor, and a memory storing a sharing application program, the sharing application program is executed by the processor to realize each operation of the home appliance control authority sharing method described above.

Optionally, the control terminal includes a mobile terminal or a server.

The present application also provides a home appliance, which includes a processor and a memory storing a sharing application program, the sharing application program is executed by the processor to realize each operation of the home appliance control authority sharing method described above.

In addition, the present application also provides a computer storage medium for storing a sharing application program for a processor to execute to realize each operation of the home appliance control authority sharing method described above.

## Claims

1. A home appliance control authority sharing method comprising following operations:
(S11) obtaining an authority setting rule corresponding to a control sharing operation upon receiving the control sharing operation, wherein the control sharing operation is obtained when a user triggers a sharing operation on a sharing interface of a sharing terminal (100);
(S12) generating a control authority to be used by a terminal to be shared (200) based on the authority setting rule, wherein the control authority comprises a restriction to at least one of a control parameter setting, a control time setting and a control environment setting,
wherein the control parameter setting comprises at least one of a control range of an operation parameter of the home appliance (300) and a control range of an operation mode of the home appliance (300),
the control time setting comprises a time period for allowing a control terminal controls the home appliance (300), and
the control environment setting comprises at least one of a location range of the home appliance (300) controlled by the control terminal, an ambient temperature control range and an ambient humidity control range of an environment in which the home appliance (300) is located; and
(S13) sharing the control authority to the terminal to be shared (200), thereby the terminal to be shared (200) controlling a home appliance (300) according to the control authority set according to the authority setting rule;
**characterized in that**
before the operation of sharing the control authority to the terminal to be shared (200), the method further comprises:
executing the operation of sharing the control authority to the terminal to be shared (200) after (S14) acquiring the terminal to be shared (200); wherein, the operation of (S14) acquiring the terminal to be shared (200) comprises:
receiving a sharing request generated by the terminal to be shared (200), wherein the sharing request is generated by scanning a QR code of a sharing terminal (100), then acquiring the terminal to be shared (200) corresponding to the sharing request, wherein the sharing request containing information of the QR code and the terminal to be shared (200);
wherein, the operation of acquiring the terminal to be shared (200) corresponding to a sharing request upon receiving the sharing request generated by the terminal to be shared (200) by scanning a QR code of a sharing terminal (100) comprises:
acquiring a current time point upon receiving the sharing request generated by the terminal to be shared (200) by scanning the QR code of the sharing terminal (100); and
determining that the current time point is within an effective time period of the QR code in the information of the QR code, and executing the operation of acquiring the terminal to be shared (200) corresponding to the sharing request.

2. The home appliance control authority sharing method according to claim 1, wherein:
the authority setting rule comprises at least one of the control parameter setting, the control time setting and the control environment setting; and/or
wherein, the operation of (S11) obtaining an authority setting rule corresponding to a control sharing operation upon receiving the control sharing operation comprises:
obtaining a user information corresponding to the terminal to be shared (200) upon receiving the control sharing operation; and
obtaining the corresponding authority setting rule according to the user information.

3. The home appliance control authority sharing method according to claim 1 or 2, wherein, the operation of (S11) obtaining an authority setting rule corresponding to a control sharing operation upon receiving the control sharing operation comprises:
outputting a setting interface of the authority setting rule upon receiving the control sharing operation; and
obtaining the authority setting rule corresponding to a setting operation upon receiving the setting operation based on the setting interface.

4. The home appliance control authority sharing method according to claim 3, wherein obtaining the authority setting rule corresponding to a setting operation comprises:
in response to that the setting operation is a rule selection operation based on the setting interface, obtaining the authority setting rule corresponding to the rule selection operation; and/or,
in response to that the setting operation is a rule input operation based on the setting interface, obtaining the authority setting rule input by the rule input operation.

5. The home appliance control authority sharing method according to any one of claims 1 to 4, wherein, after the operation of sharing the control authority to the terminal to be shared (200), the method further comprises:
(S15) obtaining a terminal to be shared (200) corresponding to an authority cancellation operation upon receiving the authority cancellation operation;
(S16) canceling the control authority of the terminal to be shared (200).

6. The home appliance control authority sharing method according to any one of claims 1 to 5, wherein, the operation of (S12) generating the control authority to be used by the terminal to be shared (200) based on the authority setting rule comprises:
(S121) acquiring a user information corresponding to the terminal to be shared (200);
(S122) determining an authority control time length according to the user information; and
(S123) generating the control authority to be used by the terminal to be shared (200) according to the authority control time length and the authority setting rule.

7. The home appliance control authority sharing method according to any one of claims 1 to 6, wherein, after the operation of sharing the control authority to the terminal to be shared (200), the method further comprises:
(S17) receiving a control information sent by the terminal to be shared (200) and outputting the control information;
wherein after the terminal to be shared (200) sends the control information to the home appliance (300), feeds back the control information to the sharing terminal (100); or
wherein the terminal to be shared (200) sends the control information, which is a preset prompt information, to the home appliance (300), and feeds back the control information to the sharing terminal (100), wherein the preset prompt information comprises an abnormal information, and the control information comprises at least one of an operation parameter of the home appliance (300), an operation function of the home appliance (300), a control time and a control place of the terminal to be shared (200).

8. A control terminal comprising a processor (1001), a memory (1005) storing a sharing application program, the sharing application program being executable by the processor (1001) to realize an operation of a home appliance control authority sharing method of any one of claims 1 to 7;
wherein the control terminal comprises a mobile terminal or a server.

9. A home appliance (300) comprising a processor (1001), a memory (1005) storing a sharing application program, the sharing application program being executable by the processor (1001) to realize an operation of a home appliance control authority sharing method of any one of claims 1 to 7.

10. A computer storage medium for storing a sharing application program for being executable by a processor (1001) to realize an operation of a home appliance control authority sharing method of any one of claims 1 to 7.

## Patentansprüche

1. Freigabeverfahren für Steuerungsberechtigungen für Haushaltsgeräte, umfassend die folgenden Vorgänge:
(S11) Erhalten einer Berechtigungseinstellungsregel entsprechend einem Steuerungsfreigabevorgang beim Empfang des Steuerungsfreigabevorgangs, wobei der Steuerungsfreigabevorgang erhalten wird, wenn ein Benutzer einen Freigabevorgang auf einer Freigabeschnittstelle eines Freigabeterminals (100) auslöst;
(S12) Erzeugen einer Steuerungsberechtigung, die von einem freizugebenden Terminal (200) verwendet werden soll, auf der Grundlage der Berechtigungseinstellungsregel, wobei die Steuerungsberechtigung eine Einschränkung für mindestens einen der folgenden Punkte umfasst: eine Steuerungsparametereinstellung, eine Steuerungszeiteinstellung und eine Steuerungsumgebungseinstellung,
wobei die Steuerungsparametereinstellung mindestens einen der folgenden Punkte umfasst: einen Steuerungsbereich eines Betriebsparameters des Haushaltsgeräts (300) und/oder einen Steuerungsbereich eines Betriebsmodus des Haushaltsgeräts (300),
die Steuerungszeiteinstellung einen Zeitraum umfasst, in dem ein Steuerungsterminal das Haushaltsgerät (300) steuern darf, und
wobei die Steuerungsumgebungseinstellung mindestens einen der folgenden Punkte umfasst: einen Standortbereich des Haushaltsgeräts (300), das von dem Steuerungsterminal gesteuert wird, einen Umgebungstemperatur-Steuerungsbereich und einen Umgebungsfeuchtigkeits-Steuerungsbereich einer Umgebung, in der sich das Haushaltsgerät (300) befindet; und
(S13) Freigabe der Steuerungsberechtigung an das freizugebende Terminal (200), wodurch das freizugebende Terminal (200) ein Haushaltsgerät (300) gemäß der gemäß der Berechtigungseinstellungsregel festgelegten Steuerungsberechtigung steuert;
**dadurch gekennzeichnet, dass**
das Verfahren vor dem Vorgang der Freigabe der Steuerungsberechtigung an das freizugebende Terminal (200) ferner Folgendes umfasst:
Ausführen des Vorgangs der Freigabe der Steuerungsberechtigung an das freizugebende Terminal (200) nach (S14) dem Erhalten des freizugebenden Terminals (200); wobei der Vorgang (S14) des Erhaltens des freizugebenden Terminals (200) Folgendes umfasst:
Empfangen einer vom freizugebenden Terminal (200) erzeugten Freigabeanforderung, wobei die Freigabeanforderung durch Scannen eines QR-Codes eines freigebenden Terminals (100) erzeugt wird, und anschließendes Erhalten des freizugebenden Terminals (200) entsprechend der Freigabeanforderung, wobei die Freigabeanforderung Informationen über den QR-Code und das freizugebende Terminal (200) enthält;
wobei der Vorgang des Erhaltens des freizugebenden Terminals (200) entsprechend einer Freigabeanforderung beim Empfang der vom freizugebenden Terminal (200) durch Scannen eines QR-Codes eines freigebenden Terminals (100) erzeugten Freigabeanforderung Folgendes umfasst:
Erhalten eines aktuellen Zeitpunkts beim Empfang der vom freizugebenden Terminal (200) durch Scannen des QR-Codes des freigebenden Terminals (100) erzeugten Freigabeanforderung; und
Bestimmen, dass der aktuelle Zeitpunkt innerhalb eines Gültigkeitszeitraums des QR-Codes in den Informationen des QR-Codes liegt, und Ausführen des Vorgangs des Erhaltens des freizugebenden Terminals (200) entsprechend der Freigabeanforderung.

2. Freigabeverfahren für Steuerungsberechtigungen für Haushaltsgeräte gemäß Anspruch 1, wobei:
die Berechtigungseinstellungsregel mindestens eine der folgenden Einstellungen umfasst: die Steuerungsparametereinstellung, die Steuerungszeiteinstellung und die Steuerungsumgebungseinstellung; und/oder
wobei der Vorgang (S11) des Erhaltens einer Berechtigungseinstellungsregel entsprechend einem Steuerungsfreigabevorgang beim Empfang des Steuerungsfreigabevorgangs Folgendes umfasst:
Erhalten von Benutzerinformationen entsprechend dem freizugebenden Terminal (200) beim Empfang des Steuerungsfreigabevorgangs; und
Erhalten der entsprechenden Berechtigungseinstellungsregel entsprechend den Benutzerinformationen.

3. Freigabeverfahren für Steuerungsberechtigungen für Haushaltsgeräte gemäß Anspruch 1 oder 2, wobei der Vorgang (S11) des Erhaltens einer Berechtigungseinstellungsregel entsprechend einem Steuerungsfreigabevorgang beim Empfang des Steuerungsfreigabevorgangs Folgendes umfasst:
Ausgeben einer Einstellungsschnittstelle der Berechtigungseinstellungsregel beim Empfang des Steuerungsfreigabevorgangs; und
Erhalten der Berechtigungseinstellungsregel entsprechend einem Einstellungsvorgang beim Empfang des Einstellungsvorgangs auf der Grundlage der Einstellungsschnittstelle.

4. Freigabeverfahren für Steuerungsberechtigungen für Haushaltsgeräte gemäß Anspruch 3, wobei das Erhalten der Berechtigungseinstellungsregel entsprechend einem Einstellungsvorgang Folgendes umfasst:
als Reaktion darauf, dass der Einstellungsvorgang ein Regelauswahlvorgang auf der Grundlage der Einstellungsschnittstelle ist, Erhalten der Berechtigungseinstellungsregel entsprechend dem Regelauswahlvorgang; und/oder
als Reaktion darauf, dass der Einstellungsvorgang ein Regeleingabevorgang auf der Grundlage der Einstellungsschnittstelle ist, Erhalten der durch den Regeleingabevorgang eingegebenen Berechtigungseinstellungsregel.

5. Freigabeverfahren für Steuerungsberechtigungen für Haushaltsgeräte gemäß einem der Ansprüche 1 bis 4, wobei das Verfahren nach dem Vorgang der Freigabe der Steuerungsberechtigung an das freizugebende Terminal (200) ferner Folgendes umfasst:
(S15) Erhalten eines freizugebenden Terminals (200) entsprechend einem Berechtigungsaufhebungsvorgang nach dem Empfang des Berechtigungsaufhebungsvorgangs;
(S16) Aufheben der Steuerungsberechtigung des freizugebenden Terminals (200).

6. Freigabeverfahren für Steuerungsberechtigungen für Haushaltsgeräte gemäß einem der Ansprüche 1 bis 5, wobei der Vorgang (S12) des Erzeugens der von dem freizugebenden Terminals (200) zu verwendenden Steuerungsberechtigung auf der Grundlage der Berechtigungseinstellungsregel Folgendes umfasst:
(S121) Erhalten von Benutzerinformationen entsprechend dem freizugebenden Terminal (200);
(S122) Bestimmen einer Berechtigungssteuerungsdauer entsprechend den Benutzerinformationen; und
(S123) Erzeugen der von dem freizugebenden Terminal (200) zu verwendenden Steuerungsberechtigung entsprechend der Berechtigungssteuerungsdauer und der Berechtigungseinstellungsregel.

7. Freigabeverfahren für Steuerungsberechtigungen für Haushaltsgeräte gemäß einem der Ansprüche 1 bis 6, wobei das Verfahren nach dem Vorgang der Freigabe der Steuerungsberechtigung an das freizugebende Terminal (200) ferner Folgendes umfasst:
(S17) Empfangen von Steuerungsinformationen, die von dem freizugebenden Terminal (200) gesendet werden, und Ausgeben der Steuerungsinformationen;
wobei das freizugebende Terminal (200), nachdem es die Steuerungsinformationen an das Haushaltsgerät (300) gesendet hat, die Steuerungsinformationen an das freigebende Terminal (100) zurückmeldet; oder
wobei das freizugebende Terminal (200) die Steuerungsinformationen, bei denen es sich um voreingestellte Aufforderungsinformationen handelt, an das Haushaltsgerät (300) sendet und die Steuerungsinformationen an das freigebende Terminal (100) zurückmeldet, wobei die voreingestellten Aufforderungsinformationen eine Fehlermeldung umfassen und die Steuerungsinformationen mindestens einen der folgenden Punkte umfassen: einen Betriebsparameter des Haushaltsgeräts (300), eine Betriebsfunktion des Haushaltsgeräts (300), eine Steuerungszeit und einen Steuerungsort des freizugebenden Terminals (200).

8. Steuerungsterminal umfassend einen Prozessor (1001), einen Speicher (1005), in dem ein Freigabeanwendungsprogramm gespeichert ist, wobei das Freigabeanwendungsprogramm vom Prozessor (1001) ausgeführt werden kann, um einen Vorgang eines Freigabeverfahrens für Steuerungsberechtigungen für Haushaltsgeräte gemäß einem der Ansprüche 1 bis 7 zu realisieren;
wobei das Steuerungsterminal ein mobiles Terminal oder einen Server umfasst.

9. Haushaltsgerät (300) umfassend einen Prozessor (1001), einen Speicher (1005), in dem ein Freigabeanwendungsprogramm gespeichert ist, wobei das Freigabeanwendungsprogramm vom Prozessor (1001) ausgeführt werden kann, um einen Vorgang eines Freigabeverfahrens für Steuerungsberechtigungen für Haushaltsgeräte gemäß einem der Ansprüche 1 bis 7 zu realisieren.

10. Computerspeichermedium zum Speichern eines Freigabeanwendungsprogramms, um von einem Prozessor (1001) ausgeführt zu werden, um einen Vorgang eines Freigabeverfahrens für Steuerungsberechtigungen für Haushaltsgeräte gemäß einem der Ansprüche 1 bis 7 zu realisieren.

## Revendications

1. Procédé de partage d'autorité de commande d'un appareil électroménager comprenant les opérations suivantes :
(S11) obtenir une règle de réglage d'autorité correspondant à une opération de partage de commande lors de la réception de l'opération de partage de commande, dans lequel l'opération de partage de commande est obtenue lorsqu'un utilisateur déclenche une opération de partage sur une interface de partage d'un terminal de partage (100) ;
(S12) générer une autorité de commande destinée à être utilisée par un terminal à partager (200) sur la base de la règle de réglage d'autorité, dans lequel l'autorité de commande comprend une restriction à au moins l'un parmi un réglage de paramètre de commande, un réglage de temps de commande et un réglage d'environnement de commande,
dans lequel le réglage de paramètre de commande comprend au moins l'un parmi une plage de commande d'un paramètre de fonctionnement de l'appareil électroménager (300) et une plage de commande d'un mode de fonctionnement de l'appareil électroménager (300),
le réglage de temps de commande comprend une période de temps permettant à un terminal de commande de commander l'appareil électroménager (300), et
le réglage d'environnement de commande comprend au moins l'un parmi une plage de localisation de l'appareil électroménager (300) commandé par le terminal de commande, une plage de commande de température ambiante et une plage de commande d'humidité ambiante d'un environnement dans lequel l'appareil électroménager (300) est situé ; et
(S13) partager l'autorité de commande avec le terminal à partager (200), de sorte que le terminal à partager (200) commande un appareil électroménager (300) conformément à l'autorité de commande réglée selon la règle de réglage d'autorité ;
**caractérisé en ce que**
avant l'opération consistant à partager l'autorité de commande avec le terminal à partager (200), le procédé comprend en outre :
exécuter l'opération consistant à partager l'autorité de commande avec le terminal à partager (200) après (S14) l'acquisition du terminal à partager (200) ; dans lequel l'opération de (S14) acquisition du terminal à partager (200) comprend :
recevoir une demande de partage générée par le terminal à partager (200), dans lequel la demande de partage est générée par balayage d'un code QR d'un terminal de partage (100), puis acquérir le terminal à partager (200) correspondant à la demande de partage, dans lequel la demande de partage contient des informations du code QR et du terminal à partager (200) ;
dans lequel l'opération consistant à acquérir le terminal à partager (200) correspondant à une demande de partage lors de la réception de la demande de partage générée par le terminal à partager (200) par balayage d'un code QR d'un terminal de partage (100) comprend :
acquérir un instant courant lors de la réception de la demande de partage générée par le terminal à partager (200) par balayage du code QR du terminal de partage (100) ; et
déterminer que l'instant courant se situe dans une période de validité du code QR dans les informations du code OR, et exécuter l'opération consistant à acquérir le terminal à partager (200) correspondant à la demande de partage.

2. Procédé de partage d'autorité de commande d'un appareil électroménager selon la revendication 1, dans lequel :
la règle de réglage d'autorité comprend au moins l'un parmi le réglage de paramètre de commande, le réglage de temps de commande et le réglage d'environnement de commande ; et/ou
dans lequel l'opération de (S11) obtention d'une règle de réglage d'autorité correspondant à une opération de partage de commande lors de la réception de l'opération de partage de commande comprend : obtenir des informations d'utilisateur correspondant au terminal à partager (200) lors de la réception de l'opération de partage de commande ; et
obtenir la règle de réglage d'autorité correspondante selon les informations d'utilisateur.

3. Procédé de partage d'autorité de commande d'un appareil électroménager selon la revendication 1 ou 2, dans lequel l'opération de (S11) obtention d'une règle de réglage d'autorité correspondant à une opération de partage de commande lors de la réception de l'opération de partage de commande comprend :
émettre une interface de réglage de la règle de réglage d'autorité lors de la réception de l'opération de partage de commande ; et
obtenir la règle de réglage d'autorité correspondant à une opération de réglage lors de la réception de l'opération de réglage sur la base de l'interface de réglage.

4. Procédé de partage d'autorité de commande d'un appareil électroménager selon la revendication 3, dans lequel l'obtention de la règle de réglage d'autorité correspondant à une opération de réglage comprend :
en réponse au fait que l'opération de réglage est une opération de sélection de règle basée sur l'interface de réglage, obtenir la règle de réglage d'autorité correspondant à l'opération de sélection de règle ; et/ou,
en réponse au fait que l'opération de réglage est une opération de saisie de règle basée sur l'interface de réglage, obtenir la règle de réglage d'autorité saisie par l'opération de saisie de règle.

5. Procédé de partage d'autorité de commande d'un appareil électroménager selon l'une quelconque des revendications 1 à 4, dans lequel, après l'opération consistant à partager l'autorité de commande avec le terminal à partager (200), le procédé comprend en outre :
(S15) obtenir un terminal à partager (200) correspondant à une opération d'annulation d'autorité lors de la réception de l'opération d'annulation d'autorité ;
(S16) annuler l'autorité de commande du terminal à partager (200).

6. Procédé de partage d'autorité de commande d'un appareil électroménager selon l'une quelconque des revendications 1 à 5, dans lequel l'opération de (S12) génération de l'autorité de commande destinée à être utilisée par le terminal à partager (200) sur la base de la règle de réglage d'autorité comprend :
(S121) acquérir des informations d'utilisateur correspondant au terminal à partager (200) ;
(S122) déterminer une durée de temps de commande d'autorité selon les informations d'utilisateur ; et
(S123) générer l'autorité de commande destinée à être utilisée par le terminal à partager (200) selon la durée de temps de commande d'autorité et la règle de réglage d'autorité.

7. Procédé de partage d'autorité de commande d'un appareil électroménager selon l'une quelconque des revendications 1 à 6, dans lequel, après l'opération consistant à partager l'autorité de commande avec le terminal à partager (200), le procédé comprend en outre :
(S17) recevoir une information de commande envoyée par le terminal à partager (200) et émettre l'information de commande ;
dans lequel, après que le terminal à partager (200) envoie l'information de commande à l'appareil électroménager (300), il renvoie l'information de commande au terminal de partage (100) ; ou
dans lequel le terminal à partager (200) envoie l'information de commande, qui est une information d'invite prédéfinie, à l'appareil électroménager (300), et renvoie l'information de commande au terminal de partage (100), dans lequel l'information d'invite prédéfinie comprend une information anormale, et l'information de commande comprend au moins l'un parmi un paramètre de fonctionnement de l'appareil électroménager (300), une fonction de fonctionnement de l'appareil électroménager (300), un temps de commande et un lieu de commande du terminal à partager (200).

8. Terminal de commande comprenant un processeur (1001), une mémoire (1005) stockant un programme d'application de partage, le programme d'application de partage pouvant être exécuté par le processeur (1001) pour réaliser une opération d'un procédé de partage d'autorité de commande d'un appareil électroménager selon l'une quelconque des revendications 1 à 7 ;
dans lequel le terminal de commande comprend un terminal mobile ou un serveur.

9. Appareil électroménager (300) comprenant un processeur (1001), une mémoire (1005) stockant un programme d'application de partage, le programme d'application de partage pouvant être exécuté par le processeur (1001) pour réaliser une opération d'un procédé de partage d'autorité de commande d'un appareil électroménager selon l'une quelconque des revendications 1 à 7.

10. Support de stockage informatique destiné à stocker un programme d'application de partage destiné à être exécuté par un processeur (1001) pour réaliser une opération d'un procédé de partage d'autorité de commande d'un appareil électroménager selon l'une quelconque des revendications 1 à 7.
